# EUROPÄISCHE PATENTSCHRIFT

(11) **EP 3 072 573 B1**
(45) Veröffentlichungstag und Bekanntmachung des Hinweises auf die Patenterteilung: **12.12.2018**
(21) Anmeldenummer: 16162347.5
(22) Anmeldetag: 24.03.2016
(51) Int. Cl.: B01D 53/04, B01D 53/14, B01D 53/34, B01D 53/94

(54) **GASREINIGUNGSANLAGE UND VERFAHREN ZUR REINIGUNG VON GASEN MIT RÜCKFÜHRUNG VON GEREINIGTEM GAS**
GAS PURIFICATION SYSTEM AND METHOD FOR THE PURIFICATION OF GASES WITH RECIRCULATION OF PURIFIED GAS
INSTALLATION ET PROCEDE DE PURIFICATION DE GAZ AVEC RECIRCULATION DE GAZ PURIFIÉ

(30) Priorität: 27.03.2015 DE 102015003906
(43) Veröffentlichungstag der Anmeldung: 28.09.2016
(73) Patentinhaber: Bilfinger Engineering & Technologies GmbH, 46047 Oberhausen (DE)
(72) Erfinder: Weghaus, Martin, 97204 Höchberg (DE)
(74) Vertreter: Cohausz & Florack

(56) Entgegenhaltungen:
- DE-A1-102012 214 281
- DE-B4- 10 260 740
- US-A1- 2012 275 976

## Beschreibung

Die Erfindung betrifft eine Gasreinigungsanlage, insbesondere zur Abscheidung von wenigstens einem Störstoff aus einem Rauchgas, mit wenigstens einer Gasreinigungsstufe, wobei die wenigstens eine Gasreinigungsstufe wenigstens eine Rohgaszuführung zum Zuführen von zu reinigendem Rohgas und eine Reingasabführung zum Abführen von in der Gasreinigungsstufe gereinigtem Reingas aufweist. Ferner betrifft die Erfindung ein Verfahren zur Reinigung von Gasen, insbesondere Rauchgas, vorzugsweise mit einer Gasreinigungsanlage der genannten Art.

Gasreinigungsanlagen der genannten Art sind in unterschiedlichen Ausgestaltungen bekannt. Vielfach dienen diese der Abscheidung von Störstoffen aus Rauchgasen, die in einer vorgeschalteten Brennkammer etwa zum Zwecke der Energiegewinnung gebildet werden. Dies ist beispielsweise im Fall von sogenannten konventionellen Kraftwerken der Fall, in deren Brennkammern, insbesondere feste, fossile Brennstoffe oder Biomasse zur Gewinnung von Strom und/oder Wärme verbrannt werden, wodurch Rauchgas gebildet wird.

Die Rauchgase gelangen nach der Brennkammer meist in einen sogenannten Dampfkessel, in dem Rauchgas unter Bildung von Wasserdampf thermische Energie entzogen wird. Das Rauchgas gelangt anschließend in eine Gasreinigungsanlage in der Störstoffe abgeschieden werden, die, beispielsweise wegen genehmigungsrechtlicher Vorgaben, nicht ohne weiteres mit dem Rauchgas an die Umgebung abgegeben werden können oder sollen.

Da die Leistung von Kraftwerken teilweise an den aktuellen Strombedarf und die regenerativ erzeugte Strommenge angepasst werden muss, können diese Kraftwerke nicht dauerhaft im bevorzugten Leistungsbereich, typischerweise Volllast, betrieben werden. Die Kraftwerke werden vielmehr je nach Strombedarf in unterschiedlichen Teillastbereichen betrieben. Kraftwerke sind in der Regel speziell für den Betrieb unter Volllast ausgelegt und unter Volllast daher problemlos zu betreiben. Gleiches gilt meist auch noch für einen Lastbereich zwischen 50% und 110% der Volllast. Problematisch kann der Betrieb der Kraftwerke jedoch werden, wenn diese bei sehr geringer Last betrieben werden, beispielsweise weniger als 20% oder gar weniger als 10% der Volllast.

Mit der Last des Kraftwerks, also etwa der thermischen Leistung des Kraftwegs sinkt etwa linear auch die anfallende Menge an Rauchgas. Wird nur sehr wenig Rauchgas gebildet, das durch die Gasreinigungsanlage strömt, treten in der Gasreinigungsanlage, die eine oder mehrere Gasreinigungsstufen umfassen kann, ungünstige fluiddynamische, thermodynamische und/oder den Stoffaustausch betreffende Prozesszustände auf. Dies kann dazu führen, dass die Störstoffe in der Gasreinigungsanlage nicht im gewünschten Umfang abgeschieden werden, obwohl insgesamt nur eine geringe Menge Rauchgas gereinigt werden muss.

Um dies zu vermeiden, werden mehrere Gasreinigungsanlagen oder wenigstens Gasreinigungsstufen parallel zueinander vorgesehen und bei entsprechendem Anfall an Rauchgas auch parallel zueinander betrieben. Das zu reinigende Gas wird dann auf die verschiedenen Gasreinigungsanalagen oder -stufen verteilt. Bei geringeren Rauchgasmengen kann dann wenigstens eine Gasreinigungsanalage oder -stufe außer Betrieb genommen werden, um die wenigstens eine andere Gasreinigungsanalage oder -stufe mit Rauchgas auszulasten. Dies erfordert jedoch einen erhöhten apparativen Aufwand.

Eine Gasreinigungsanlage, die als Ausgangspunkt der Erfindung angesehen werden kann, ist in der DE 10 20012 214281 A1 genannt. Weitere ähnliche Gasreinigungsanlagen werden in der DE 102 60 740 B4 und der US 2012/275976 A1 beschrieben.

Daher liegt der vorliegenden Erfindung die Aufgabe zugrunde, die eingangs genannte und zuvor näher beschriebene Gasreinigungsanlage derart auszugestalten und weiterzubilden, dass eine zufriedenstellende Abscheidung des wenigstens einen Störstoffs auch bei erheblich schwankenden Lasten mit geringem apparativem Aufwand erreicht wird.

Diese Aufgabe ist bei einer Gasreinigungsanlage nach dem Oberbegriff des Anspruchs 1 dadurch gelöst, dass eine Reingasrückführung zur Rückführung von einem Teil des über die Reingasabführung abgeführtem Reingases zurück in die wenigstens eine Gasreinigungsstufe vorgesehen ist.

Zudem ist die genannte Aufgabe gemäß Anspruch 10 durch ein Verfahren gelöst, bei dem ein mit dem wenigstens einen Störstoff beladenes Rohgas wenigstens einer Gasreinigungsstufe einer Gasreinigungsanlage zugeführt und in der wenigstens einen Gasreinigungsstufe durch Abscheidung des wenigstens einen Störstoffs gereinigt wird, bei dem der wenigstens einen Gasreinigungsstufe ein flüssiges Reaktionsmittel zur Abscheidung des wenigstens einen Störstoffs in der Gasreinigungsstufe zugeführt wird und bei dem das in der wenigstens einen Gasreinigungsstufe gereinigte Reingas aus der wenigstens einen Gasreinigungsstufe abgeführt und wenigstens teilweise in die wenigstens eine Gasreinigungsstufe zurückgeführt wird.

Die Erfindung hat also erkannt, dass der Betrieb der Gasreinigungsanlage bei geringen Lasten dadurch verbessert werden kann, dass ein Teil des in wenigstens einer Gasreinigungsstufe der Gasreinigungsanlage erzeugten Reingases in die wenigstens eine Gasreinigungsstufe zurückgeführt wird. Durch diese Rückführung eines Teils des gereinigten Gases wird der Gasstrom in der wenigstens einen Gasreinigungsstufe trotz Teillast erhöht und so die Fluiddynamik gesteigert. Dadurch werden die thermodynamischen und Stofftransportprozesse begünstigt. Der die wenigstens eine Gasreinigungsstufe passierende Massenstrom und/oder Volumenstrom an Gas kann dabei vorzugsweise wenigstens zwischen 50% und 110% des bei Volllast anfallenden Massenstroms und/oder Volumenstrom an Gas betragen. Eine parallele Ausbildung von mehreren Gasreinigungsanlagen oder Gasreinigungsstufen ist daher aufgrund der Reingasrückführung entbehrlich. Bevorzugte Ergebnisse werden grundsätzlich erhalten, wenn der rückgeführte Volumenstrom des Reingases wenigstens 50% des zugeführten Rohgases und/oder des abgeführten Reingases beträgt. Der rückgeführte Volumenstrom des Reingases kann aber auch etwa so groß sein wie der Volumenstrom des zugeführten Rohgases und/oder des abgeführten Reingases. Besonders bevorzugt kann es zudem sein, wenn der rückgeführte Volumenstrom des Reingases ein Mehrfaches des zugeführten Rohgases und/oder des abgeführten Reingases beträgt.

Das Reingas, das die Gasreinigungsanlage, die bedarfsweise mehrere hintereinander geschaltete Gasreinigungsstufen umfasst, kann wieder am Anfang, also bedarfsweise in die erste Gasreinigungsstufe zurückgeführt werden, so dass das rückgeführte Reingas die Gasreinigungsanlage erneut komplett durchläuft. Dies bietet sich beispielsweise an, wenn die Gasreinigungsanlage nur eine Gasreinigungsstufe umfasst oder durch die Rückführung in der gesamten Gasreinigungsanlage der Gasvolumenstrom gesteigert werden soll. Führt jedoch die verminderte Strömungsgeschwindigkeit aufgrund von Teillast nur in einer Gasreinigungsstufe oder in bestimmten Gasreinigungsstufen der Gasreinigungsanlage zu erheblichen Nachteilen, kann das Reingas auch nur in diese Gasreinigungsstufe oder Gasreinigungsstufen zurückgeführt werden. Dabei ist es sinnvollerweise nicht zwingend erforderlich, dass das Reingas der letzten Gasreinigungsstufe von mehreren hintereinander angeordneten Gasreinigungsstufen rückgeführt wird. Es kann auch das Reingas einer anderen Gasreinigungsstufe zurückgeführt werden. Mithin ist vorliegend der Begriff Reingas nicht zwingend absolut zu verstehen, als im Sinne des vollständig gereinigten Gases oder im Sinne des die Gasreinigungsanlage verlassenden Gases. Der Begriff Reingas kann zudem im relativen Sinne das in wenigstens einer Gasreinigungsstufe wenigstens teilweise gereinigte Gas meinen.

In gleicher Weise ist der Begriff Rohgas nicht zwingend absolut zu verstehen, also im Sinne des der Gasreinigungsanlage zugeführten Gases. Es kann sich bei dem Rohgas nach relativem Verständnis auch um das einer nicht am Anfang einer Reihe von Gasreinigungsstufen vorgesehenen Gasreinigungsstufe zugeführte Gas handeln, das dann nach dem Austritt aus derselben Gasreinigungsstufe oder einer anderen nachgelagerten Gasreinigungsstufe als zurückzuführendes Reingas anfallen kann.

Die Gasreinigungsanlage und das Verfahren zur Reinigung von Gasen werden nachfolgend zusammen beschrieben, ohne jeweils im Einzelnen zwischen der Gasreinigungsanlage und dem Verfahren zu unterscheiden. Dem Fachmann wird jedoch anhand des Kontextes ersichtlich, welche Merkmale jeweils in Bezug auf die Gasreinigungsanlage und das Verfahren zur Reinigung von Gasen bevorzugt sind.

Bei einer ersten Ausgestaltung der Gasreinigungsanlage ist die Reingasrückführung so mit der Rohgaszuführung verbunden, dass das zurückgeführte Reingas der wenigstens einen Gasreinigungsstufe über die Rohgaszuführung zugeführt wird. Dies ist konstruktiv einfach. Dabei kann die Reingasrückführung als Verbindung zwischen der Rohgaszuführung und der Reingasabführung ausgebildet sein. Bedarfsweise kann das Reingas der Einfachheit halber über einen gemeinsamen Stutzen abgeführt und anschließend aufgeteilt werden, oder das rückzuführende Reingas wird über einen separaten Stutzen abgezogen. Besonders einfach ist es aber das rückzuführende Reingas aus einer das Reingas abführenden Leitung der Reingasabführung abzuziehen. Analog ist es aus konstruktiver Sicht bevorzugt, das rückzuführende Reingas einer das zuzuführende Rohgas leitenden Leitung zuzuführen. Bedarfsweise kann hierfür aber auch ein separater Stutzen der Zuführeinrichtung vorgesehen sein, wenn dies etwa strömungstechnisch vorteilhaft ist.

Zur Reinigung des Rohgases, also zur Abscheidung des wenigstens einen Störstoffs, wird der wenigstens einen Gasreinigungsstufe wenigstens ein Reaktionsmittel zugeführt. Dazu weist die wenigstens eine Gasreinigungsstufe eine Reaktionsmittelzuführung auf. Alternativ oder zusätzlich kann eine Reaktionsmittelabführung zum Abführen von in der wenigstens einen Gasreinigungsstufe zur Abscheidung von Störstoffen verwendetem Reaktionsmittel aus der wenigstens einen Gasreinigungsstufe vorgesehen sein. Durch die Zuführung und/oder Abführung von Reaktionsmittel kann die Störstoffabscheidung gewährleistet und/oder eine Anreicherung von Störstoffen in der wenigstens einen Gasreinigungsstufe vermieden werden. Besonders zweckmäßig hat sich die Gareinigungsanlage und das Verfahren zur Reinigung von Gasen erwiesen, wenn zur Abscheidung des wenigstens einen Störstoffs ein Reaktionsmittel in Form von Flüssigkeitströpfchen und/oder feinen Partikeln verwendet wird, die von dem Gasstrom in der wenigstens einen Gareinigungsstufe transportiert werden können. Dann kann sich nämlich die Verweilzeit des Reaktionsmittels in der wenigstens einen Gasreinigungsstufe bei zu geringer Strömungsgeschwindigkeit des zu reinigenden Gases in der Gasreinigungsstufe grundsätzlich erheblich verringern, was durch die Verwendung einer Reingasrückführung vermieden werden kann.

Besonders zweckmäßig für die Abscheidung des wenigstens einen Störstoffs ist die Verwendung eines flüssigen Reaktionsmittels mit einer bezogen auf den wenigstens einen abzuscheidenden Störstoff adsorptiven, katalytischen und/oder reaktiven Wirkung, wobei das Reaktionsmittel durch Tropfen gebildet werden kann. Unter einer Abscheidung eines Störstoffs kann also vorliegend auch eine reaktive Umsetzung des Störstoffs zu einem nicht störenden oder anschließend abzuscheidenden Reaktionsprodukt verstanden werden. Im Reingas ist auch dann die Menge oder Konzentration des wenigstens einen Störstoffs geringer als im Rohgas.

Die Reingasrückführung bietet sich insbesondere für Gaseinigungsanlagen oder Gasreinigungsstufen an, die als Absorber, Reaktor und/oder Filter ausgebildet sind, da es beim bestimmungsgemäßen Betrieb solcher Gasreinigungsstufen in hohem Maße auf die Fluiddynamik, insbesondere die Gasphasenströmung, ankommt. Die Fluiddynamik und die Gasphasenströmung kann dann nämlich in hohem Maße den Stoffaustausch, insbesondere an der Phasengrenze zwischen Reaktionsmittel und Gas beeinflussen. Beispielsweise kann auch die Verweilzeit des Reaktionsmittels und/oder des wenigstens einen Störstoffs bzw. Gases bei solchen Gasreinigungsstufen stark durch die Gasphasenströmung des zu reinigenden Gases beeinflusst werden. Alternativ oder zusätzlich zu der Verweilzeit kann durch einen zu geringen Gasvolumenstrom letztlich die Kontaktzeit zwischen dem Gas und dem Reaktionsmittel abnehmen.

Gasreinigungsstufen, die sich nur schwerlich zufriedenstellend betreiben lassen, wenn sie mit geringen spezifischen Gasvolumen bzw. mit geringen Gasgeschwindigkeiten durchströmt werden, sind beispielsweise Kolonnen mit Kolonnenböden oder Packungen. Dabei kann im Falle eines Flugstromabscheiders insbesondere ein partikelförmiges Reaktionsmittel zur Abscheidung des wenigstens einen Störstoffs herangezogen werden, das adsorptive, katalytische und/oder reaktive Partikel umfasst.

Unabhängig davon führt die Reingasrückführung insbesondere bei Gasreinigungsstufen zur Abscheidung von Schwefelverbindungen, insbesondere Schwefeldioxid, von Stickstoffverbindungen, insbesondere NOx, von Säuren, insbesondere Salzsäure und/oder Schwefelsäure, von Staub, von Schwermetallen, von organischen Verbindungen, insbesondere VOC, PAK, zu guten Ergebnissen.

Durch die Integration eines Gebläses und/oder einer Drossel in der Rohgaszuführung, der Reingasabführung und/oder der Reingasrückführung kann sichergestellt werden, dass jeweils die gewünschte und bedarfsweise vorbestimmte Menge an Reingas über die Reingasrückführung zurückgeführt wird.

Alternativ oder zusätzlich kann die wenigstens eine Gasreinigungsstufe einer Brennkammer zum Erzeugen der zu reinigenden Rauchgase und/oder einem Kessel zum Erzeugen von Prozessdampf über einen Wärmetausch mit dem Rauchgas nachgeschaltet sein. Dann kann die Gasreinigungsanlage dem sicheren und zuverlässigen Betrieb eines Kraftwerks dienen und insbesondere Teil eines Kraftwerks sein. Damit begünstigt die Gasreinigungsanlage eine zuverlässige Stromversorgung.

Nachfolgend wird die Erfindung anhand einer lediglich Ausführungsbeispiele darstellenden Zeichnung näher beschrieben. In der Zeichnung zeigt
- Fig. 1: ein schematisches Fließbild einer ersten erfindungsgemäßen Gasreinigungsanlage und
- Fig.2: ein schematisches Fließbild einer zweiten erfindungsgemäßen Gasreinigungsanlage.

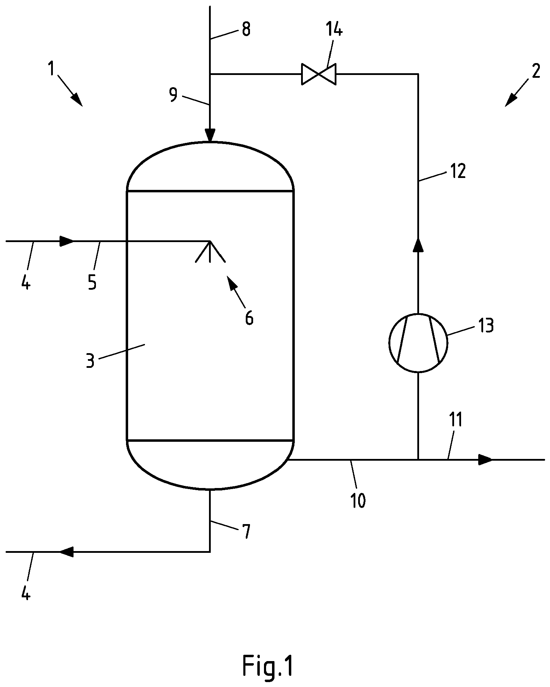

In der Fig. 1 ist ein Gasreinigungsstufe 1 einer Gasreinigungsanlage 2 dargestellt, wobei die Gasreinigungsanlage 2 weitere Gasreinigungsstufen in Strömungsrichtung des Gases vor oder hinter der dargestellten Gasreinigungsstufe 1 aufweisen kann, aber nicht muss. Die dargestellte Gasreinigungsstufe 1 weist einen Wäscher 3 auf, der ein Reaktionsmittel 4 in Form von Waschflüssigkeit über eine Reaktionsmittelzuführung 5 zugeführt wird. Das Reaktionsmittel 4 wird über einen Sprühkopf 6 in der Gasreinigungsstufe 1 versprüht und anschließend am Boden der Gasreinigungsstufe 1 über eine Reaktionsmittelabführung 7 abgeführt und sodann verworfen oder aufbereitet.

Bei der dargestellten und insoweit bevorzugten Gasreinigungsanlage 2 wird im Gleichstrom mit dem Reaktionsmittel 4 ein Rohgas 8 umfassend einen Störstoff, beispielsweise Schwefeldioxid, durch die Gasreinigungsstufe 1 geleitet. Eine Gegenstromführung wäre aber auch denkbar. Das Rohgas tritt am Kopf der Gasreinigungsstufe 1 über eine Rohgaszuführeinrichtung 9 ein und am Boden der Gasreinigungsstufe 1 als Reingas 10 über eine Reingasabführung 11 aus. Dazwischen wird der wenigstens eine Störstoff wenigstens teilweise durch Absorption in Reaktionsmittel 4 aus dem Gasstrom abgeschieden, so dass die Menge und Konzentration des Störstoffs im die Gasreinigungsstufe 1 verlassenden Reingas 11 verglichen mit dem in die Gasreinigungsstufe 1 eintretenden Rohgas 8 geringer ist.

Das Reingas 11 wird nach dem Verlassen der dargestellten Gasreinigungsstufe 1 teilweise über eine Reingasrückführung 12 in die Gasreinigungsstufe 1 zurückgeführt und bei der dargestellten und insoweit bevorzugten Gasreinigungsanlage 2 zusammen mit dem Rohgas 8 der Gasreinigungsstufe 1 zugeführt. Zum Überwinden des Druckverlusts über die Gasreinigungsstufe 1 ist in der Reingasrückführung 12 ein Gebläse 13 vorgesehen. Der rückzuführende Teilstrom des Reingases 11 kann dabei über eine ebenfalls in der Reingasrückführung 12 vorgesehene Drossel 14, etwa in Form eines Ventils, eines Schiebers oder einer Klappe, eingestellt werden. Es sind aber auch andere Anordnungen von Gebläse 13 und Drossel 14 denkbar. Der nicht rückgeführte Teilstrom des Reingases 11 wird abgeleitet und bedarfsweise einer weiteren Gasreinigungsstufe zugeführt.

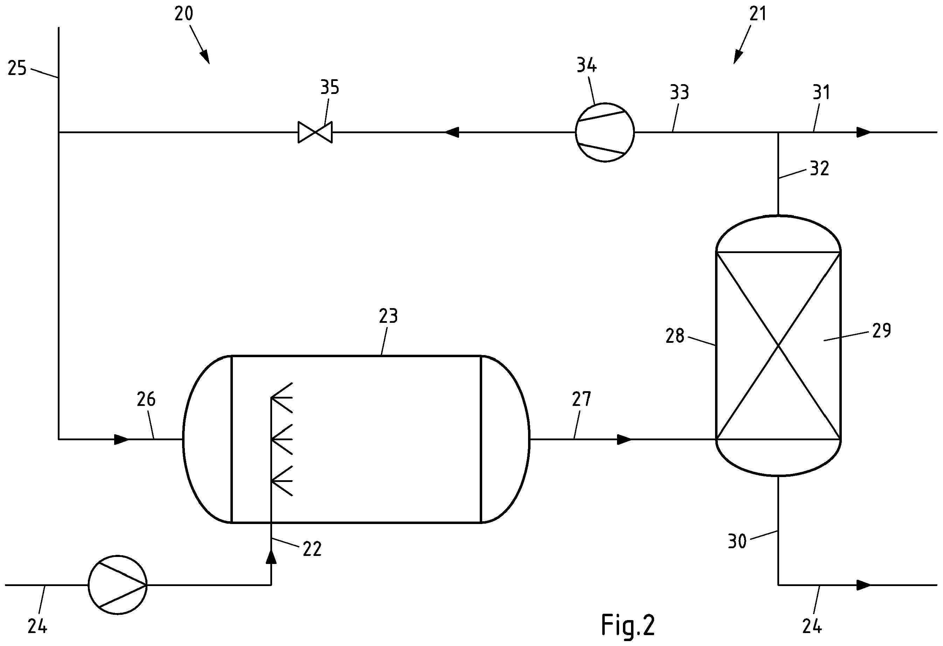

In der Fig. 2 ist eine alternative Gasreinigungsanalage 20 dargestellt, in der ein zweistufiger Gasreinigungsprozess in einer zweiteiligen Gasreinigungsstufe 21 durchgeführt wird, die nicht unbedingt die erste Gasreinigungsstufe der Gasreinigungsanalage 20 sein muss. Über eine Reaktionsmittelzuführung 22 wird dem ersten Teil 23 der Gasreinigungsstufe 21 ein feuchtes Reaktionsmittel 24, etwa in Form einer Suspension, zugeführt. Das Reaktionsmittel 24, bei dem es sich beispielsweise um Kalkmilch handeln kann, wird im ersten Teil 23 der Gasreinigungsstufe 21 versprüht. Im Gleichstrom mit dem Reaktionsmittel 24 wird dem ersten Teil 23 der Gasreinigungsstufe 21 Rohgas 25, insbesondere enthaltend Schwefeldioxid als Störstoff, über eine Rohgaszuführeinrichtung 26 zugeführt. Das Rohgas 25 strömt durch den ersten Teil 23 der Gasreinigungsstufe 21 und transportiert das Reaktionsmittel 24, etwa nach Art eines Flugstromabscheiders, mit sich, wobei das Reaktionsmittel 24 teilweise verdampfen kann. Das Gemisch 27 aus Gas und Reaktionsmittel 24 strömt anschließend in den zweiten Teil 28 der Gasreinigungsstufe 21 ein, in der ein Filterelement 29 vorgesehen ist, an dem der nicht verdunstete Teil des Reaktionsmittels 24, insbesondere der Feststoffanteil des Reaktionsmittels 24, mechanisch abgeschieden wird.

Beim Durchtritt durch den zweiten Teil 28 der Gasreinigungsstufe 21 in Form eines Filters reagiert der Störstoff weiter mit dem im Filter abgeschiedenen Reaktionsmittel 24. Das abgeschiedene Reaktionsmittel 24 kann vom Filterelement 29 entfernt und über eine am Boden des zweiten Teils 28 der Gasreinigungsstufe 21 vorgesehen Reaktionsmittelabführung 30 abgezogen werden. Das Reingas 31 wird am Kopf des zweiten Teils 28 der Gasreinigungsstufe 21 über eine Reingasabführung 32 abgezogen, wobei ein Teil des Reingases 31 über eine Reingasrückführung 33 in das Rohgas 25 und sodann über die Rohgaszuführung 26 wieder in den ersten Teil 23 der Gasreinigungsstufe 21 zurückgeführt wird. Zum Transport und zur Einstellung des rückgeführten Reingases 31 ist in der Reingasrückführung 33 ein Gebläse 34 und eine Drossel 35 vorgesehen.

## Patentansprüche

1. Gasreinigungsanlage (2,20), insbesondere zur Abscheidung von wenigstens einem Störstoff aus einem Rauchgas, mit wenigstens einer Gasreinigungsstufe (1,21), wobei die wenigstens eine Gasreinigungsstufe (1,21) wenigstens eine Rohgaszuführung (9,26) zum Zuführen von zu reinigendem Rohgas (8,25) und eine Reingasabführung (10,32) zum Abführen von in der Gasreinigungsstufe (1,21) gereinigtem Reingas (11,31) aufweist, wobei die wenigstens eine Gasreinigungsstufe (1,21) eine Reaktionsmittelzuführung (5,22) zum Zuführen von flüssigem Reaktionsmittel (4,24) zum Abscheiden von Störstoffen in der wenigstens einen Gasreinigungsstufe (1,21) aufweist.
**dadurch gekennzeichnet, dass**
eine Reingasrückführung (12,33) zur Rückführung von einem Teil des über die Reingasabführung (10,32) abgeführtem Reingases (11,31) zurück in die wenigstens eine Gasreinigungsstufe (1,21) vorgesehen ist.

2. Gasreinigungsanlage nach Anspruch 1,
**dadurch gekennzeichnet, dass**
die Reingasrückführung (12,33) derart mit der Rohgaszuführung (9,26) verbunden ist, dass das zurückgeführte Reingas (11,31) der wenigstens einen Gasreinigungsstufe (1,21) über die Rohgaszuführung (9,26) zugeführt wird.

3. Gasreinigungsanlage nach Anspruch 1 oder 2,
**dadurch gekennzeichnet, dass**
die wenigstens eine Gasreinigungsstufe (1,21) oder eine Reaktionsmittelabführung (7,30) zum Abführen von in der wenigstens einen Gasreinigungsstufe (1,21) zur Abscheidung von Störstoffen verwendetem Reaktionsmittel (4,24) aus der wenigstens einen Gasreinigungsstufe (1,21) aufweist.

4. Gasreinigungsanlage nach einem der Ansprüche 1 bis 3,
**dadurch gekennzeichnet, dass**
die wenigstens eine Gasreinigungsstufe (1,21) als Absorber, Reaktor und/oder Filter ausgebildet ist.

5. Gasreinigungsanlage nach einem der Ansprüche 1 bis 4,
**dadurch gekennzeichnet, dass**
die wenigstens eine Gasreinigungsstufe (1,21) als Kolonne mit Kolonnenböden oder Packungen ausgebildet ist.

6. Gasreinigungsanlage nach einem der Ansprüche 1 bis 5,
**dadurch gekennzeichnet, dass**
die wenigstens eine Gasreinigungsstufe (1,21) zur Abscheidung von Schwefelverbindungen, insbesondere Schwefeldioxid, Stickstoffverbindungen, insbesondere NOx, Säuren, insbesondere Salzsäure und/oder Schwefelsäure, Staub, Schwermetalle, organische Verbindungen, insbesondere VOC, PAK.

7. Gasreinigungsanlage nach einem der Ansprüche 1 bis 6,
**dadurch gekennzeichnet, dass**
ein Gebläse (13,34) und/oder eine Drossel (14,35) in der Rohgaszuführung, der Reingasabführung oder der Reingasrückführung (12,33) vorgesehen ist.

8. Gasreinigungsanlage nach einem der Ansprüche 1 bis 7,
**dadurch gekennzeichnet, dass**
die wenigstens eine Gasreinigungsstufe (1,21) einer Brennkammer zum Erzeugen der zu reinigenden Rauchgase und/oder einem Kessel zum Erzeugen von Prozessdampf über einen Wärmetausch mit dem Rauchgas nachgeschaltet ist.

9. Verfahren zur Reinigung von Gasen, insbesondere Rauchgas, vorzugsweise mit einer Gasreinigungsanlage (2,20) nach einem der Ansprüche 1 bis 8,
bei dem ein mit dem wenigstens einen Störstoff beladenes Rohgas (8,25) wenigstens einer Gasreinigungsstufe (1,21) einer Gasreinigungsanlage (2,20) zugeführt und in der wenigstens einen Gasreinigungsstufe (1,21) durch Abscheidung des wenigstens einen Störstoffs gereinigt wird,
bei dem der wenigstens einen Gasreinigungsstufe (1,21) ein flüssiges Reaktionsmittel (4,24) zur Abscheidung des wenigstens einen Störstoffs in der Gasreinigungsstufe (1,21) zugeführt wird,
und
bei dem das in der wenigstens einen Gasreinigungsstufe (1,21) gereinigte Reingas (11,31) aus der wenigstens eine Gasreinigungsstufe (1,21) abgeführt und wenigstens teilweise in die wenigstens eine Gasreinigungsstufe (1,21) zurückgeführt wird.

10. Verfahren nach Anspruch 9,bei dem das zur Abscheidung des wenigstens einen Störstoffs verwendete Reaktionsmittel (4,24) aus der wenigstens einen Gasreinigungsstufe (1,21) abgezogen wird.

11. Verfahren nach Anspruch 9 oder 10,
bei dem das Reaktionsmittel (424) den wenigstens einen Störstoff durch Absorption, Reaktion und/oder katalytisch abscheidet.

12. Verfahren nach einem der Ansprüche 9 bis 11,
bei dem der wenigstens eine Störstoff in wenigstens einer als Absorber, Reaktor, Filter und/oder Kolonne ausgebildeten Gasreinigungsstufe (1,21) abgeschiedenen wird.

13. Verfahren nach einem der Ansprüche 9 bis 12,
bei dem wenigstens ein Störstoff in Form von wenigstens einer Schwefelverbindung, insbesondere Schwefeldioxid, wenigstens eine Stickstoffverbindung, insbesondere NOx, wenigstens eine Säure, insbesondere Salzsäure und/oder Schwefelsäure, wenigstens ein Schwermetall und/oder als wenigstens eine organische Verbindung, insbesondere VOC und/oder PAK in der wenigstens einen Gasreinigungsstufe (1,21) abgeschiedenen wird.

## Claims

1. Gas purification system (2, 20), in particular for separating at least one pollutant from a flue gas, having at least one gas purification stage (1, 21), wherein the at least one gas purification stage (1, 21) comprises at least one raw gas supply (9, 26) for supplying raw gas (8, 25) to be purified, and a clean gas discharge (10, 32) for discharging clean gas (11, 31) purified in the gas purification stage (1, 21), wherein the at least one gas purification stage (1, 21) comprises a reactant supply (5, 22) for supplying liquid reactant (4, 24) for separating pollutants in the at least one gas purification stage (1, 21),
**characterised in that**
the clean gas return (12, 33) for returning a part of the clean gas (11, 31) discharged through the clean gas discharge (10, 32) back into the at least one gas purification stage (1, 21) is provided.

2. Gas purification system according to Claim 1,
**characterised in that**
the clean gas return (12, 33) is connected to the raw gas supply (9, 26) in such a way that the returned clean gas (11, 31) is supplied to the at least one gas purification stage (1, 21) through the raw gas supply (9, 26).

3. Gas purification system according to Claim 1 or 2,
**characterised in that**
the at least one gas purification stage (1, 21)has a reactant discharge (7, 30) for discharging reactant (4, 24) used for separating pollutants in the at least one gas purification stage (1, 21) from the at least one gas purification stage (1, 21).

4. Gas purification system according to any one of Claims 1 to 3,
**characterised in that**
the at least one gas purification stage (1, 21) is configured as an absorber, reactor and/or filter.

5. Gas purification system according to any one of Claims 1 to 4,
**characterised in that**
the at least one gas purification stage (1, 21) is configured as a column with column trays or packings.

6. Gas purification system according to any one of Claims 1 to 5,
**characterised in that**
the at least one gas purification stage (1, 21) for separating sulphur compounds, in particular sulphur dioxide, nitrogen compounds, in particular NOx, acids, in particular hydrochloric acid and/or sulfuric acid, dust, heavy metals, organic compounds, in particular VOC, PAH.

7. Gas purification system according to any one of Claims 1 to 6,
**characterised in that**
a fan (13, 34) and/or a throttle (14, 35) is provided in the raw gas supply, the clean gas discharge or the clean gas return (12, 33).

8. Gas purification system according to any one of Claims 1 to 7,
**characterised in that**
the at least one gas purification stage (1, 21) is connected downstream of a combustion chamber for producing the flue gases to be purified and/or a boiler for producing process steam by means of heat exchange with the flue gas.

9. Method for purifying gases, in particular flue gas, preferably with a gas purification system (2, 20) according to any one of Claims 1 to 8, wherein a raw gas (8, 25) laden with the at least one pollutant is supplied to at least one gas purification stage (1, 21) of a gas purification system (2, 20) and is purified in the at least one gas purification stage (1, 21) by separating the at least one pollutant, wherein a liquid reactant (4, 24) for separating the at least one pollutant in the gas purification stage (1, 21) is supplied to the at least one gas purification stage (1, 21),
and
wherein the clean gas (11, 31) purified in the at least one gas purification stage (1, 21) is discharged from the at least one gas purification stage (1, 21) and at least partially returned into the at least one gas purification stage (1, 21).

10. Method according to Claim 9, wherein the reactant (4, 24) used for separating the at least one pollutant is extracted from the at least one gas purification stage (1, 21).

11. Method according to Claim 9 or 10,
wherein the reactant (424) separates the at least one pollutant by absorption, reaction and/or catalytically.

12. Method according to any one of Claims 9 to 11,
wherein the at least one pollutant is separated in at least one gas purification stage (1, 21) configured as an absorber, reactor, filter and/or column.

13. Method according to any one of Claims 9 to 12,
wherein at least one pollutant in the form of at least one sulphur compound, in particular sulphur dioxide, at least one nitrogen compound, in particular NOx, at least one acid, in particular hydrochloric acid and/or sulfuric acid, at least one heavy metal and/or as at least one organic compound, in particular VOC, PAH, is separated in the at least one gas purification stage (1, 21).

## Revendications

1. Installation de purification de gaz (2, 20), notamment destinée à séparer au moins une substance parasite d'un gaz de fumée, comprenant au moins un étage de purification de gaz (1, 21), ledit au moins un étage de purification du gaz (1, 21) présentant au moins une arrivée d'approvisionnement de gaz brut (9, 26) pour l'approvisionnement de gaz brut à purifier (8, 25) et une évacuation de gaz pur (10, 32) pour l'évacuation du gaz pur (11, 31) purifié dans l'étage de purification du gaz (1, 21), ledit au moins un étage de purification de gaz (1, 21) présentant une arrivée d'approvisionnement d'agent réactif (5, 22) servant à l'approvisionnement d'agent réactif liquide (4, 24) destiné à séparer les substances parasites dans ledit au moins un étage de purification du gaz (1, 21),
**caractérisée en ce**
**qu'**un retour de gaz pur (12, 33) pour le retour d'une partie du gaz pur (11, 31) évacué par le biais de l'évacuation de gaz pur (10, 32) est prévu dans ledit au moins un étage de purification du gaz (1, 21).

2. Installation de purification de gaz selon la revendication 1,
**caractérisée en ce que**
le retour de gaz pur (12, 33) est relié à l'arrivée de gaz brut (9, 26) de telle sorte que le gaz pur (11, 31) renvoyé est approvisionné audit au moins un étage de purification du gaz (1, 21) par le biais de l'arrivée d'approvisionnement de gaz brut (9, 26).

3. Installation de purification de gaz selon la revendication 1 ou 2,
**caractérisée en ce que**
ledit moins un étage de purification du gaz (1, 21) présente une évacuation d'agent réactif (7, 30) destinée à évacuer dudit au moins un étage de purification du gaz (1, 21) l'agent réactif (4, 24) utilisé pour la séparation des substances parasites dans ledit au moins un étage de purification de gaz (1, 21).

4. Installation de purification de gaz selon l'une des revendications 1 à 3,
**caractérisée en ce que**
ledit au moins un étage de purification de gaz (1, 21) est réalisé sous la forme d'un absorbeur, d'un réacteur et/ou d'un filtre.

5. Installation de purification de gaz selon l'une des revendications 1 à 4,
**caractérisée en ce que**
ledit moins un étage de purification du gaz (1, 21) est réalisé sous forme de colonne avec des fonds de colonne ou des garnitures.

6. Installation de purification de gaz selon l'une des revendications 1 à 5,
**caractérisée en ce que**
ledit au moins un étage de purification du gaz (1, 21) pour la séparation de composés de soufre, notamment de dioxyde de soufre, de composés d'azote, notamment de NOx, d'acides, notamment d'acide chlorhydrique et/ou d'acide sulfurique, de poussière, de métaux lourds, de composés organiques, notamment des COV, des HPA.

7. Installation de purification de gaz selon l'une des revendications 1 à 6,
**caractérisée en ce**
**qu'**une soufflerie (13, 34) et/ou un étrangleur (14, 35) est prévu dans l'arrivée de d'approvisionnement gaz brut, l'évacuation de gaz pur ou le retour du gaz pur (12, 33).

8. Installation de purification de gaz selon l'une des revendications 1 à 7,
**caractérisée en ce que**
ledit au moins un étage de purification de gaz (1, 21) est situé en aval d'au moins une chambre de combustion destinée à générer le gaz de fumée à purifier et/ou une chaudière destinée à générer de la vapeur de processus par le biais d'un échange de chaleur avec le gaz de fumée.

9. Procédé de purification de gaz, notamment de gaz de fumée, de préférence avec une installation de purification de gaz (2, 20) selon l'une des revendications 1 à 8, dans lequel un gaz brut (8, 25) chargé d'au moins une substance parasite est approvisionné à au moins un étage de purification du gaz (1, 21) d'une installation de purification de gaz (2, 20) et purifié dans ledit au moins un étage de purification du gaz (1, 21) par séparation de ladite au moins une substance parasite,
dans lequel un agent réactif liquide (4, 24) destiné à la séparation de ladite au moins une substance parasite dans ledit au moins un étage de purification de gaz (1, 21) est approvisionné audit au moins un étage de purification du gaz (1, 21),
et
dans lequel le gaz pur (11, 31) purifié dans ledit au moins un étage de purification du gaz (1, 21) est évacué de l'au moins un étage de purification de gaz (1, 21) et au moins partiellement renvoyé dans ledit au moins un étage de purification de gaz (1, 21).

10. Procédé selon la revendication 9, dans lequel l'agent réactif (4, 24) utilisé pour la séparation de ladite au moins une substance parasite est extraite dudit au moins un étage de purification de gaz (1, 21).

11. Procédé selon la revendication 9 ou 10,
dans lequel l'agent réactif (424) sépare ladite au moins une substance parasite par absorption, réaction et/ou de manière catalytique.

12. Procédé selon l'une des revendications 9 à 11,
dans lequel ladite au moins une substance parasite est séparée dans ledit au moins un étage de purification du gaz (1, 21) réalisé sous la forme d'un absorbeur, d'un réacteur, d'un filtre et/ou d'une colonne.

13. Procédé selon l'une des revendications 9 à 12,
dans lequel ladite au moins une substance parasite sous la forme d'au moins un composé de soufre, notamment de dioxyde de soufre, d'au moins un composé d'azote, notamment de NOx, d'au moins un acide, notamment d'acide chlorhydrique et/ou d'acide sulfurique, d'au moins un métal lourd et/ou d'au moins un composé organique, notamment un COV et/ou un HPA est séparée dans ledit au moins un étage de purification de gaz (1, 21).
